# EUROPÄISCHE PATENTSCHRIFT

(11) **EP 3 577 350 B1**
(45) Veröffentlichungstag und Bekanntmachung des Hinweises auf die Patenterteilung: **27.07.2022**
(21) Anmeldenummer: 18700642.4
(22) Anmeldetag: 08.01.2018
(51) Int. Cl.: F16B 13/00, F16B 25/10, F16B 25/00, F16B 33/00, F16B 13/02, F16B 13/12

(54) **GIPSKARTONPLATTENDÜBEL**
GYPSUM PLASTERBOARD DOWEL
CHEVILLE DE PLAQUE DE PLÂTRE

(30) Priorität: 31.01.2017 DE 102017101796; 12.10.2017 DE 102017123762
(43) Veröffentlichungstag der Anmeldung: 11.12.2019
(73) Patentinhaber: fischerwerke GmbH & Co. KG, 72178 Waldachtal (DE)
(72) Erfinder: NEHL, Wolfgang, 72178 Waldachtal-Tumlingen (DE); FREY, Christian, 72250 Freudenstadt-Wittlensweiler (DE)
(86) Internationale Anmeldenummer: PCT/EP2018/050374
(87) Internationale Veröffentlichungsnummer: WO 2018/141508

(56) Entgegenhaltungen:
- DE-A1-102007 005 280
- US-A- 5 234 299

## Beschreibung

Die Erfindung betrifft einen Gipskartonplattendübel mit den Merkmalen des Oberbegriffs des Anspruchs 1. Der Gipskartonplattendübel ist zum Einschrauben in eine Gipskartonplatte zu einer Befestigung einer Lampe, einer Vorhangschiene oder eines anderen Gegenstands mit einer in den Gipskartonplattendübel geschraubten Schraube an der Gipskartonplatte vorgesehen. Die Erfindung ist nicht auf diesen Verwendungszweck beschränkt.

Die japanische Patentanmeldung mit der Veröffentlichungsnummer JP 2000 310 210 A offenbart einen Dübel aus Kunststoff mit der Form einer Senkkopf-Holzschraube, in dessen in einer Einschraubrichtung vorderes Ende ein hinteres Ende eines leistenförmigen und in Ansicht pfeilförmigen Bohreinsatzes dreh- und axialfest aufgenommen ist. Der Bohreinsatz besteht aus einem Werkstoff, der beim Durchbohren einer Gipskartonplatte nicht durch Reibungswärme schmilzt, und steht koaxial nach vorn aus dem vorderen Ende des Dübels vor. Eine Schraube, die in den Dübel eingeschraubt wird, drückt den Bohreinsatz nach vorn aus dem vorderen Ende des Dübels heraus, so dass die Schraube aus dem vorderen Ende des Dübels austreten kann und eine Einschraubtiefe einer Schraube in den Dübel nicht von dem Bohreinsatz begrenzt wird.

Die deutsche Patentanmeldung DE102007005280A1 offenbart einen Gipskartonplattendübel, mit einem Dübelkörper, der ein in Gipskarton selbstschneidendes Gewinde zum Einschrauben in eine Gipskartonplatte und ein axiales Schraubloch zum Durchstecken einer Schraube aufweist, und mit einem Bohreinsatz zum Bohren eines Dübellochs zum Einschrauben des Dübelkörpers in die Gipskartonplatte, wobei der Bohreinsatz zumindest teilweise aus einem Werkstoff besteht, der beim Durchbohren einer Gipskartonplatte nicht durch Reibungswärme schmilzt, und wobei der Bohreinsatz an einem in einer Einschraubrichtung vorderen Abschnitt des Dübelkörpers angeordnet ist und der in der Einschraubrichtung nach vorn über ein in der Einschraubrichtung vorderes Ende des Dübelkörpers vorsteht, wobei der Bohreinsatz eine Solltrennstelle zum Abtrennen oder zu einem Verdrängen eines nach vorn über das vordere Ende des Dübelkörpers vorstehenden vorderen Teils des Bohreinsatzes durch Durchstecken einer Schraube in das Schraubloch des Dübelkörpers aufweist, und wobei der Gipskartonplattendübel derart ausgestaltet ist, dass ein am vorderen Abschnitt des Dübelkörpers angeordneter hinterer Teil des Bohreinsatzes als Widerlager für ein Schraubengewinde der in das Schraubloch schraubbaren Schraube am vorderen Abschnitt des Dübelkörpers verbleibt.

Aufgabe der Erfindung ist, einen alternativen und zu einem Einschrauben in eine Gipskartonplatte geeigneten Gipskartonplattendübel mit einem zum Bohren von Gipskarton geeigneten Bohreinsatz vorzuschlagen.

Diese Aufgabe wird erfindungsgemäß durch einen Gipskartonplattendübel mit den Merkmalen des Anspruchs 1 gelöst. Der erfindungsgemäße Gipskartonplattendübel weist einen vorzugsweise aus Kunststoff bestehenden Dübelkörper und einen Bohreinsatz auf, der über ein in einer Einschraubrichtung vorderes Ende des Dübelkörpers vorsteht. Der Dübelkörper weist ein in Gipskarton selbstschneidendes Gewinde, das sich axial entlang einer Längsachse des Gipskartonplattendübels erstreckt, zum Einschrauben des Dübelkörpers in Gipskarton und ein axiales Schraubloch zum Einschrauben einer Schraube in den Dübelkörper auf. Das Schraubloch ist an einem in der Einschraubrichtung hinteren Ende des Dübelkörpers zum Einschrauben einer Schraube offen und kann bis zum vorderen Ende des Dübelkörpers durchgehen. Das Schraubloch ist insbesondere achsparallel und insbesondere zudem koaxial zum selbstschneidenden Gewinde des Dübelkörpers, das heißt, dass das Schraubloch den Dübelkörper innerhalb des Gewindes durchsetzt. Möglich ist allerdings auch ein zum Gewinde schiefes Schraubloch. Das Schraubloch kann gewindelos zum Einschrauben einer selbstschneidenden Schraube ausgebildet sein oder ein Innengewinde als Gegengewinde für das Schraubengewinde einer Schraube aufweisen.

Der Bohreinsatz besteht zumindest teilweise aus einem zum Bohren eines Dübellochs in eine Gipskartonplatte geeigneten Werkstoff, der beim Durchbohren einer Gipskartonplatte nicht durch Reibungswärme schmilzt und hinsichtlich seiner Bohreignung insbesondere widerstandsfähiger als der Werkstoff des Dübelkörpers ist. Insbesondere ist ein in der Einschraubrichtung des Dübelkörpers hinterer Teil des Bohreinsatzes dreh- und axialfest an einem vorderen Abschnitt des Dübels angeordnet, insbesondere in diesem aufgenommen, derart, dass während des Bohrens die Verbindung dreh- und axialfest ist. Dies wird insbesondere durch Form- und/oder Reibschluss zwischen dem Dübelkörper und dem Bohreinsatz, beispielsweise durch Umspritzen beim Herstellen im Spritzgussverfahren, erreicht. Der Bohreinsatz steht insbesondere koaxial zur Längsachse des Gipskartonplattendübels über das vordere Ende des Dübelkörpers über, kann aber auch achsparallel und/oder schief über das vordere Ende des Dübelkörpers vorstehen.

Erfindungsgemäß weist der Bohreinsatz eine Solltrennstelle zu einem Abtrennen oder einem Verdrängen eines nach vorn über das vordere Ende des Dübelkörpers vorstehenden vorderen Teils des Bohreinsatzes von dem an dem vorderen Abschnitt des Dübelkörpers angeordneten hinteren Teil des Bohreinsatzes auf. Die Solltrennstelle kann sich an dem vorderen Ende des Dübelkörpers, im Dübelkörper oder vor dem vorderen Ende des Dübelkörpers befinden. Die Solltrennstelle ist beispielsweise eine Passung, eine umlaufende Einschnürung, eine Kerbe, eine sonstige Materialschwächung oder eine sonstige konstruktive und/oder physikalische Maßnahme am Bohreinsatz, an dem der vordere Teil des Bohreinsatzes bei Überschreiten einer Bruchbelastung durch das Einschrauben einer Schraube in das Schraubloch des Dübelkörpers vom hinteren, in dem vorderen Abschnitt des Dübelkörpers zum Bohren dreh- und axialfest aufgenommenen hinteren Teil abbricht, abreißt oder sich in sonstiger Weise trennt oder einreißt und/oder sich zur Seite biegt.

Eine von hinten in das Schraubloch des Dübelkörpers eingeschraubte Schraube tritt an dem am vorderen Abschnitt des Dübelkörpers angeordneten hinteren Teil des Bohreinsatzes vorbei oder durch den am vorderen Abschnitt des Dübelkörpers angeordneten hinteren Teil des Bohreinsatzes hindurch und bricht, trennt, reißt, schiebt oder dergleichen den vorderen, über das vordere Ende des Dübelkörpers nach vorn vorstehenden vorderen Teil des Bohreinsatzes ab oder drückt ihn so zur Seite oder aus dem Dübelkörper bzw. dem hinteren Teil des Bohreinsatzes heraus, dass die Schraube aus dem vorderen Ende des Dübelkörpers austreten kann. Ein Zurseitebiegen des vorderen, über das vordere Ende des Dübelkörpers nach vorn überstehenden Teils des Bohreinsatzes kann auch als Verdrängen des vorderen Teils des Bohreinsatzes aufgefasst werden. Die Solltrennstelle des Bohreinsatzes des erfindungsgemäßen Gipskartonplattendübels ermöglicht ein Durchschrauben einer Schraube durch den Dübelkörper und einen Austritt der Schraube aus dem vorderen Ende des Dübels.

Der am vorderen Abschnitt des Dübelkörpers angeordnete hintere Teil des Bohreinsatzes verbleibt als Widerlager für ein Schraubengewinde einer in das Schraubloch geschraubten Schraube am vorderen Abschnitt des Dübelkörpers. Die Schraube bildet gemeinsam mit dem Gipskartonplattendübel eine Befestigungseinheit, wobei die axiale Länge der Schraube insbesondere größer als die axiale Länge des Gipskartonplattendübels ist. Der hintere Teil des Bohreinsatzes kann hülsenförmig mit einem Innengewinde als Gegengewinde für eine Schraube oder gewindelos für eine selbstschneidende Schraube sein. Ein hülsenförmiger, hinterer Teil des Bohreinsatzes kann durch Einschrauben einer Schraube aufgeweitet und/oder aufgerissen werden. Der hintere Teil des Bohreinsatzes kann sich auch seitlich an einer Stelle eines Umfangs oder an mehreren, beispielsweise zwei gegenüberliegenden Stellen eines Umfangs des Schraublochs des Dübelkörpers oder jedenfalls an einer oder mehreren Stellen des Dübelkörpers befinden, an denen ein Schraubengewinde einer in das Schraubloch des Dübelkörpers geschraubten Schraube in Eingriff mit dem hinteren Teil des Bohreinsatzes oder seiner Teile tritt. Beispielsweise kann der hintere Teil des Bohreinsatzes zwei Halbrohre oder zwei oder mehr Teilrohre aufweisen. Der hintere Teil des Bohreinsatzes kann in Umfangsrichtung verlaufende Rillen, Gewindesegmente oder dergleichen für den Eingriff der Schraube aufweisen oder gewindelos für eine selbstschneidende Schraube sein. Die Erläuterungen dienen einer Veranschaulichung von Ausführungsmöglichkeiten des hinteren Teils des Bohreinsatzes, sie sind beispielhaft und nicht abschließend.

Ein Einschrauben des Gipskartonplattendübels in eine Gipskartonplatte ist der vorgesehene Verwendungszweck des erfindungsgemäßen Gipskartonplattendübels. Die Erfindung ist jedoch nicht auf das Einschrauben des Gipskartonplattendübels in eine Gipskartonplatte beschränkt.

Gemäß der Erfindung ist vorgesehen, dass der als Widerlager für das Schraubengewinde einer in das Schraubloch des Dübelkörpers geschraubten Schraube dienende hintere Teil des Bohreinsatzes durch Umspritzen am vorderen Abschnitt des Dübelkörpers mit Kunststoff des Dübelkörpers angeordnet ist, was hier auch den Fall umfasst, dass der hintere Teil des Bohreinsatzes in den Dübelkörper eingespritzt sein kann, das die umgreifende Form somit vor dem Einspritzen und Herstellen des hinteren Teils des Bohreinsatzes erfolgt. Alternativ kann der Bohreinsatz formschlüssig rastend in oder auf eine Aufnahme des Dübelkörpers ein- oder aufgesteckt sein. In diesem Fall sind die Aufnahme und ein zur Aufnahme korrespondierender Abschnitt des Bohreinsatzes insbesondere als Nut- und Feder-Rastung ausgebildet. Beide Alternativen, das Umspritzen und die Rastverbindung, ermöglichen eine mechanisch stabile Verbindung des Bohreinsatzes mit dem Dübelkörper und eine kostengünstige Herstellung des Gipskartonplattendübels.

Vorzugsweise besteht der Dübelkörper aus einem ersten Kunststoff und der hintere Teil des Bohreinsatzes besteht aus einem anderen Werkstoff als der Dübelkörper, insbesondere aus einem anderen, zweiten Kunststoff. Der Dübelkörper besteht beispielsweise aus Polyamid, während der zweite Kunststoff ein Polypropylen oder ein faserverstärktes Polyamid sein kann.

Weiterhin ist bevorzugt, dass der vordere Teil des Bohreinsatzes aus Metall, Polyetheretherketon (abgekürzt: PEEK) oder Polyphthalamid (abgekürzt: PPA) besteht. Der Dübelkörper und/oder der Bohreinsatz können faserverstärkt sein.

Eine Ausgestaltung der Erfindung sieht einen Dübelkörper vor, der durch Einschrauben einer Schraube in sein Schraubloch aufspreizbar ist. Zum Aufspreizen kann der Dübelkörper dehnbar sein und/oder einen oder mehrere Spreizschlitze, Spreiznuten oder dergleichen aufweisen. Weist der Dübelkörper Spreizschlitze oder Spreiznuten auf, so ist das selbstschneidende Gewinde in diesem Bereich insbesondere unterbrochen, derart, dass Gewindeabschnitte gebildet werden. Durch die Unterbrechung des Gewindes behindert das Gewinde ein Aufspreizen des Dübelkörpers nicht.

Vorzugsweise ist der hintere Teil des Bohreinsatzes, der an dem vorderen Abschnitt des Dübelkörpers angeordnet ist und das Widerlager für das Schraubengewinde einer in das Schraubloch des Dübelkörpers geschraubten Schraube bildet, in einer Ebene oder Ebenen mit dem oder den Spreizschlitzen, Spreiznuten oder dergleichen des Dübelkörpers geteilt. Dadurch erhöht er ein Einschraubmoment der Schraube in den Dübelkörper nicht oder nur wenig.

Bei einer bevorzugten Ausgestaltungsform des erfindungsgemäßen Gipskartondübels ist der hintere Teil des Bohreinsatzes, nach dem Bohren und nach dem Abtrennen des vorderen Teils des Bohreinsatzes, mittels einer Schraube, die in den als Widerlager wirkenden hinteren Teil des Bohreinsatzes formschlüssig eingreift, relativ zum Dübelkörper axial, insbesondere nach hinten, zum hinteren Ende des Dübelkörpers hin bewegbar. Vorzugsweise kann der hintere Teil des Bohreinsatzes beim Einschrauben der Schraube in den Dübelkörper hinein bewegt werden, derart, dass der Dübelkörper aufgespreizt wird. Insbesondere weist der Dübelkörper in diesem Fall einen Spreizschlitz oder eine Spreiznut auf, in die der hintere Teil des Bohreinsatzes zum Aufspreizen eingezogen wird beziehungsweise an dem oder an der er sich entlang bewegt. Der hintere Teil des Bohreinsatzes wirkt dabei als Spreizelement und kann hierfür insbesondere keilförmig oder konisch ausgebildet sein.

Die Erfindung wird nachfolgend anhand von zwei in der Zeichnung dargestellten Ausführungsbeispielen näher erläutert. Es zeigen:
- Figur 1: einen ersten erfindungsgemäßen Gipskartonplattendübel in perspektivischer Darstellung;
- Figur 2: den Gipskartonplattendübel aus Figur 1 eingeschraubt in eine Gipskartonplatte und mit einer eingeschraubten Schraube in einem perspektivischen Achsschnitt;
- Figur 3: den Gipskartonplattendübel aus den Figuren 1 und 2 eingeschraubt in eine Gipskartonplatte in aufgespreiztem Zustand, jedoch ohne Schraube in einem Figur 2 entsprechenden perspektivischen Achsschnitt;
- Figur 4: einen zweiten erfindungsgemäßen Gipskartonplattendübel in perspektivischer Darstellung; und
- Figur 5: den Gipskartonplattendübel aus Figur 4 in einem aufgespreizten Zustand mit eingeschraubter Schraube in einer perspektivischen Darstellung.

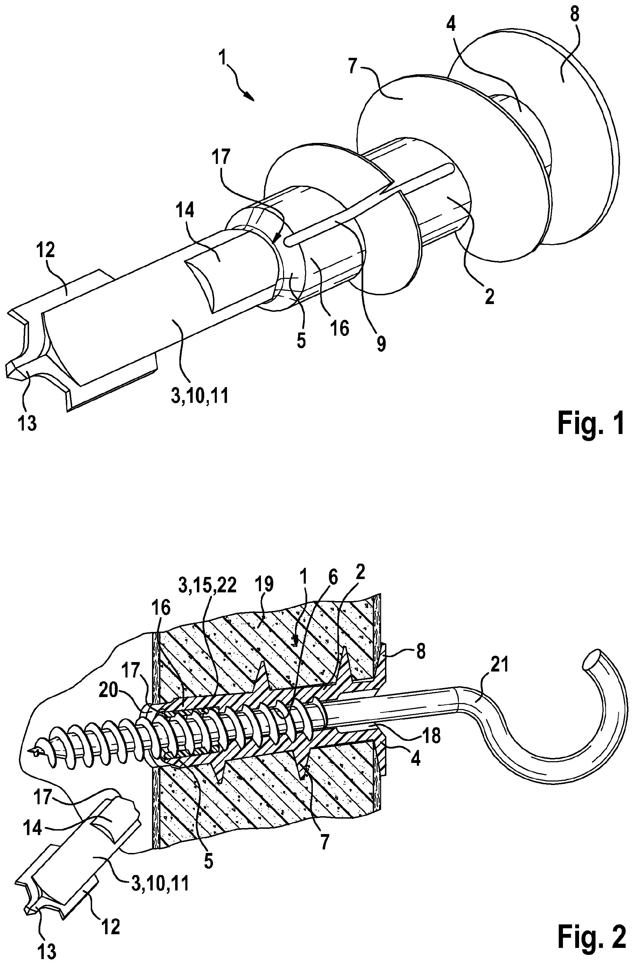

Der in Figur 1 dargestellte, erste erfindungsgemäße Gipskartonplattendübel 1 weist einen Dübelkörper 2 aus Kunststoff, im Ausführungsbeispiel aus Polyamid, und einen Bohreinsatz 3 auf, der den Dübelkörper 2 axial verlängert. Der Bohreinsatz 3 besteht vollständig aus einem Werkstoff der beim Durchbohren einer Gipskartonplatte 19 nicht durch Reibungswärme schmilzt und somit beim Bohren in Gipskarton widerstandsfähiger als der Werkstoff des Dübelkörpers 2 ist. Im ersten Ausführungsbeispiel besteht der Bohreinsatz 3 ebenfalls aus einem Kunststoff, beispielsweise aus festem und wärmebeständigem Polyetheretherketon (abgekürzt: PEEK) oder Polyphthalamid (abgekürzt: PPA).

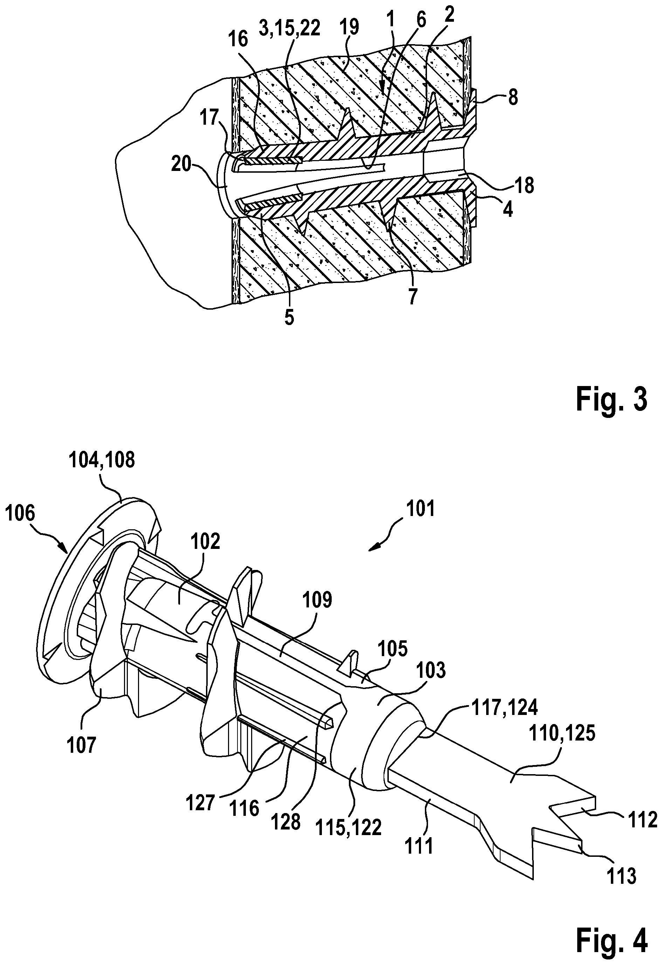

Der Dübelkörper 2 ist rohrförmig und verjüngt sich wenig von einem in einer Einschraubrichtung hinteren Ende 4 zu einem in der Einschraubrichtung vorderen Ende 5. Ein den Dübelkörper 2 axial durchsetzendes Durchgangsloch bildet ein Schraubloch 6, das sich ebenfalls vom hinteren Ende 4 zum vorderen Ende 5 des Dübelkörpers 2 wenig verjüngt (Figuren 2 und 3). Das Schraubloch 6 ist zum Einschrauben einer Schraube 21 vorgesehen und kann ein Innengewinde als Gegengewinde für ein Schraubengewinde der Schraube 21 aufweisen. Im Ausführungsbeispiel ist das Schraubloch 6 gewindelos und zum Einschrauben der Schraube 21 mit selbstschraubendem Schraubengewinde vorgesehen. In einem hinteren Abschnitt ist das Schraubloch 6 zu einem Innenstern (TORX) 18 zum Ansetzen eines nicht gezeichneten Drehwerkzeugs zu einem Drehantrieb des Gipskartonplattendübels 1 erweitert. Andere Formen wie beispielsweise ein Innensechskant sind möglich.

Der Dübelkörper 2 weist ein in einem Werkstoff wie Gipskarton selbstschneidendes Gewinde 7, im Ausführungsbeispiel ein Spitzgewinde mit spitzem Flankenwinkel, großer Gewindehöhe und von vorn nach hinten zunehmendem Gewindedurchmesser auf. Am hinteren Ende 4 weist der Dübelkörper 2 einen Radialflansch 8 auf. In einer vorderen Hälfte weist der Dübelkörper 2 einander gegenüberliegende Längsschlitze in einer Axialebene als Spreizschlitze 9 auf. Im Bereich der Spreizschlitze 9 ist das Gewinde 7 unterbrochen.

Ein nach vorn über das vordere Ende 5 des Dübelkörpers 2 vorstehender vorderer Teil 10 des Bohreinsatzes 3 hat die Form eines Schaftes 11 mit bikonvexem Querschnitt und mit einer plattenförmigen Schneide 12 in einer Axialebene, die achsparallel radial und als Bohrerspitze 13 koaxial zum Gewinde 7 nach vorn übersteht. Die Schneide 12 und Bohrerspitze 13 sind einstückige Bestandteile des Bohreinsatzes 3. In einem an das vordere Ende 5 des Dübelkörpers 2 anschließenden hinteren Abschnitt ist der Bohreinsatz 3 zu einer zylindrischen Verstärkung 14 verdickt. Ein hinterer Teil 15 des Bohreinsatzes 3 ist hülsenförmig und wird bei einer Herstellung des Dübelkörpers 2 mit Kunststoff des Dübelkörpers 2 umspritzt, so dass der Bohreinsatz 3 dreh- und axialfest an einem in der Einschraubrichtung vorderen Abschnitt 16 des Dübelkörpers 2 angeordnet und in diesem aufgenommen ist. Ein Übergang von dem hülsenförmigen hinteren Teil 15 des Bohreinsatzes 3 in die massive Verstärkung 14 in dem hinteren Abschnitt des vorderen Teils 10 des Bohreinsatzes 3 bildet eine Solltrennstelle 17 zwischen dem vorderen Teil 10 und dem hinteren Teil 15 des Bohreinsatzes 3 am vorderen Ende 5 des Dübelkörpers 2 des erfindungsgemäßen Gipskartonplattendübels 1.

Zu einer Befestigung in beispielsweise einer Gipskartonplatte 19 wird der Gipskartonplattendübel 1 mit seinem Innenstern 18 auf beispielsweise einen nicht gezeichneten Akkuschrauber oder ein sonstiges Drehantriebswerkzeug aufgesetzt, drehend angetrieben und gegen die Gipskartonplatte 19 gedrückt. Dadurch bohrt der Bohreinsatz 3 ein Dübelloch 20 durch die Gipskartonplatte 19, in dessen Bohrlochwand sich nachfolgend das Gewinde 7 des Dübelkörpers 2 schneidet, so dass sich der Dübelkörper 2 in die Gipskartonplatte 19 schraubt. Das Einschrauben ist beendet, wenn der Radialflansch 8 am hinteren Ende 4 des Dübelkörpers 2 auf der Gipskartonplatte 19 aufsitzt. Der Bohreinsatz 3 steht unverändert aus dem vorderen Ende 5 des Dübelkörpers 2 und auf einer Rückseite der Gipskartonplatte 19 aus dem Dübelloch 20 vor.

Zu einer Befestigung eines nicht gezeichneten Gegenstands mit dem Gipskartonplattendübel 1 an der Gipskartonplatte 19 wird eine Schraube 21, im Ausführungsbeispiel ein Schraubhaken, vom hinteren Ende 4 her in das Schraubloch 6 des Dübelkörpers 2 geschraubt bzw. durch den Dübelkörper 2 durchgeschraubt. Ein Schraubengewinde der Schraube 21 schneidet sich in den Dübelkörper 2 und in den hülsenförmigen hinteren Teil 15 des Bohreinsatzes 3 ein. Bei einem Austritt aus dem vorderen Ende des hülsenförmigen hinteren Teils 15 des Bohreinsatzes 3 und aus dem vorderen Ende 5 des Dübelkörpers 2 trennt die Schraube 21 den vorn aus dem Dübelkörper 2 vorstehenden vorderen Teil 10 des Bohreinsatzes 3 an der Solltrennstelle 17 am vorderen Ende 5 des Dübelkörpers 2 von dem hülsenförmigen hinteren Teil 15 des Bohreinsatzes 3 ab, der in dem vorderen Abschnitt 16 des Dübelkörpers 2 verbleibt und dort ein Widerlager 22 für das Schraubengewinde der Schraube 21 bildet. Beim Durchschrauben durch den Dübelkörper 2 und beim Austreten aus dem vorderen Ende 5 des Dübelkörpers 2 kann die Schraube 21 den vorderen Teil 10 des Bohreinsatzes 3 nur teilweise vom hinteren Teil 15 abreißen und so weit zur Seite drücken, dass die Schraube 21 am vorderen Teil 10 des Bohreinsatzes 3 vorbeitreten kann (nicht dargestellt). Das mögliche Zurseitedrücken des vorderen Teils 10 des Bohreinsatzes 3 kann auch als Verdrängen des vorderen Teils 10 des Bohreinsatzes 3 aufgefasst werden.

Beim Einschrauben in das Schraubloch 6 des Dübelkörpers 2 weitet die Schraube 21 den Dübelkörper 2 auf und drückt ihn fester in eine Bohrlochwand des Dübellochs 20 in der Gipskartonplatte 19 bzw. drückt den Dübelkörper 2 in die Bohrlochwand des Dübellochs 20 ein, wie es in Figuren 2 und 3 zu sehen ist. Das Aufweiten erfolgt primär rechtwinklig zu der Ebene, in der die Spreizschlitze 9 liegen. Durch die Unterbrechung des Gewindes 7 im Bereich der Spreizschlitze 9 behindert das Gewinde 7 das Aufweiten nicht. Dieses Aufweiten des Dübelkörpers 2 durch Einschrauben der Schraube 21 kann auch als Aufspreizen des Dübelkörpers 2 aufgefasst werden. Der hülsenförmige hintere Teil 15 des Bohreinsatzes 3 ist durch in der Zeichnung nicht sichtbare Längsschlitze in derselben Axialebene wie die Spreizschlitze 9 des Dübelkörpers 2 geteilt und kann dadurch ebenso wie der Dübelkörper 2 aufgeweitet werden. In diesem Fall ist der hintere Teil 15 des Bohreinsatzes 3 axialfest und wird beim Einschrauben der Schraube 21 nicht relativ zum Dübelkörper 2 bewegt.

Figur 3 zeigt den Dübelkörper 2 aufgespreizt wie Figur 2 jedoch aus Gründen der Veranschaulichung ohne die Schraube 21.

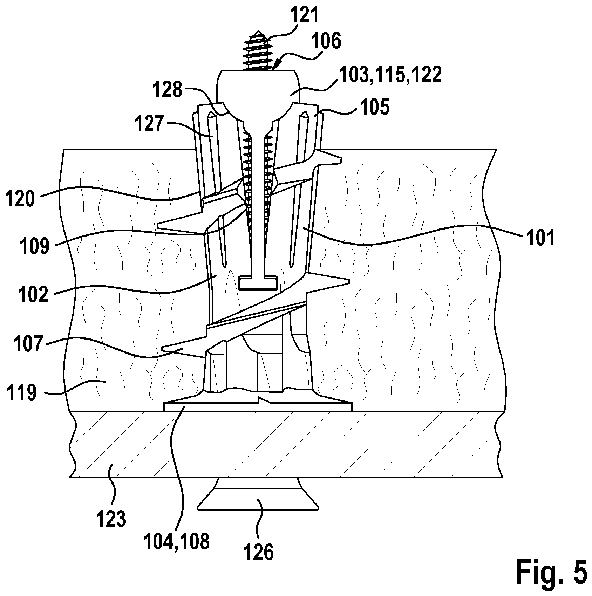

In den Figuren 4 und 5 ist ein zweiter erfindungsgemäßer Gipskartonplattendübel 101 dargestellt, der sich insbesondere durch die Ausbildung des Bohreinsatzes 103 von dem in den Figuren 1 bis 3 dargestellten ersten erfindungsgemäßen Gipskartonplattendübel 1 unterscheidet. Um Wiederholungen zu vermeiden, wird nachfolgend nur auf die Unterschiede zu dem ersten erfindungsgemäßen Gipskartonplattendübel 1 eingegangen. Der Bohreinsatz 103 ist zweiteilig ausgebildet. Der vordere Teil 110 des Bohreinsatzes 103 wird durch eine aus Metallblech gestanzte Klinge 125 gebildet, die mit einem Schaft 111, Schneiden 112 und einer Bohrspitze 113 in der Art eines Holzbohrers ausgebildet ist. Damit mit der Klinge 125 ein Dübelloch 120 in eine Gipskartonplatte 119 gebohrt werden kann, ist sie in einer passenden Aufnahme 124 im hinteren Teil 115 des Bohreinsatzes 103 vor dem Eindrehen einer Schraube 121 in das Schraubloch 106 durch Form- und Reibschluss zum Bohren dreh- und axialfest gehalten. Der hintere Teil 115 des Bohreinsatzes 103 ist wiederum dreh- und axialfest am Dübelkörper 102 gehalten, da er am hinteren Ende mit dem Kunststoff des Dübelkörpers 102 umspritzt ist, wobei der hintere Teil 115 formschlüssig in Spreizschlitze 109 eingreift. Der hintere Teil 115 des Bohreinsatzes 103 ist aus einem zweiten Kunststoff hergestellt, der sich vom ersten Kunststoff des Dübelkörpers 102 unterscheidet. Der Dübelkörper 102 besteht in diesem Fall aus einem Polyamid, während der hintere Teil 115 des Bohreinsatzes 103 aus Polypropylen hergestellt ist.

Der als Klinge 125 ausgebildete vordere Teil 110 des Bohreinsatzes 103 ist in axialer Richtung nach vorne reibschlüssig in der Aufnahme 124 des hinteren Teils 115 des Bohreinsatzes 103 aufgenommen, derart, dass die Klinge 125 beim Einschrauben einer Schraube 121 herausgedrückt wird. Die Aufnahme 124 bildet in diesem Fall die Solltrennstelle 117.

Beim Einschrauben der Schraube 121 in das Schraubloch 106 vom hinteren Ende 104 in Richtung zum vorderen Ende 105 des Dübelkörpers 102 wird der in eine Gipskartonplatte 119 eingeschraubte Dübelkörper 102 im Bereich seiner Spreizschlitze 109 aufgespreizt, wodurch das Gewinde 107 und axial verlaufende Rippen 127, die außen an einem vorderen Abschnitt 116 des Dübelkörpers 102 angeordnet sind, zur Drehsicherung in die Gipskartonplatte 119 eingedrückt werden. Sobald ein Kopf 126 der Schraube 121 an einem zu befestigenden Gegenstand 123 anliegt, wird durch ein Weiterdrehen der Schraube 121 der als Widerlager 122 wirkende hintere Teil 115 des Bohreinsatzes 103 vom aufgespreizten Grundkörper 102 durch Überwinden einer zwischen dem Grundkörper 102 und dem hinteren Teil 115 des Bohreinsatzes 103 wirkenden Haltekraft gelöst. Nach dem Lösen kann der hintere Teil 115 des Bohreinsatzes 103 nach hinten in Richtung des Radialflanschs 108 bewegt werden, wodurch der Grundkörper 102 weiter aufspreizt, was zu einem besseren Halt des Gipskartonplattendübels 101 im Dübelloch 120 führt. Hierzu sind auf der dem Grundkörper 102 zugewandten hinteren Seite des Widerlagers 122 Keilflächen 128 ausgeformt, die ein Einziehen des Widerlagers 122 in die Spreizschlitze 109 und somit ein Aufspreizen des Grundkörpers 102 erleichtern.

### Bezuqszeichenliste

### Gipskartonplattendübel

- 1, 101: Gipskartonplattendübel
- 2, 102: Dübelkörper
- 3, 103: Bohreinsatz
- 4, 104: hinteres Ende des Dübelkörpers 2, 102
- 5, 105: vorderes Ende des Dübelkörpers 2, 102
- 6, 106: Schraubloch
- 7, 107: Gewinde
- 8, 108: Radialflansch
- 9, 109: Spreizschlitz
- 10, 110: vorderer Teil des Bohreinsatzes 3, 103
- 11, 111: Schaft
- 12, 112: Schneide
- 13, 113: Bohrerspitze
- 14: Verstärkung
- 15, 115: hinterer Teil des Bohreinsatzes 3, 103
- 16, 116: vorderer Abschnitt des Dübelkörpers 2, 102
- 17, 117: Solltrennstelle
- 18: Innenstern
- 19, 119: Gipskartonplatte
- 20, 120: Dübelloch
- 21, 121: Schraube
- 22, 122: Widerlager
- 123: Gegenstand
- 124: Aufnahme
- 125: Klinge
- 126: Kopf der Schraube 121
- 127: Rippe
- 128: Keilfläche

## Patentansprüche

1. Gipskartonplattendübel, mit einem Dübelkörper (2, 102), der ein in Gipskarton selbstschneidendes Gewinde (7, 107) zum Einschrauben in eine Gipskartonplatte (19, 119) und ein axiales Schraubloch (6, 106) zum Einschrauben einer Schraube (21, 121) aufweist, und mit einem Bohreinsatz (3, 103) zum Bohren eines Dübellochs (20, 120) zum Einschrauben des Dübelkörpers (2, 102) in die Gipskartonplatte (19, 119), wobei der Bohreinsatz (3, 103) zumindest teilweise aus einem Werkstoff besteht, der beim Durchbohren einer Gipskartonplatte nicht durch Reibungswärme schmilzt, und wobei der Bohreinsatz (3, 103) an einem in einer Einschraubrichtung vorderen Abschnitt (16, 116) des Dübelkörpers (2, 102) angeordnet ist und der in der Einschraubrichtung nach vorn über ein in der Einschraubrichtung vorderes Ende (5, 105) des Dübelkörpers (2, 102) vorsteht, wobei der Bohreinsatz (3, 103) eine Solltrennstelle (17, 117) zum Abtrennen oder zu einem Verdrängen eines nach vorn über das vordere Ende (5, 105) des Dübelkörpers (2, 102) vorstehenden vorderen Teils (10, 110) des Bohreinsatzes (3, 103) durch Einschrauben einer Schraube (21, 121) in das Schraubloch (6, 106) des Dübelkörpers (2, 102) aufweist,
wobei der Gipskartonplattendübel derart ausgestaltet ist, dass nach dem Abtrennen oder Verdrängen des vorderen Teils (10, 110) des Bohreinsatzes (3, 103) ein am vorderen Abschnitt (16, 116) des Dübelkörpers (2, 102) angeordneter hinterer Teil (15, 115) des Bohreinsatzes (3, 103) als Widerlager (22, 122) für ein Schraubengewinde der in das Schraubloch (6, 106) schraubbaren Schraube (21, 121) am vorderen Abschnitt (16, 116) des Dübelkörpers (2, 102) verbleibt, und dass der als Widerlager (22, 122) für das Schraubengewinde der in das Schraubloch (6, 106) des Dübelkörpers (2, 102) schraubbaren Schraube (21, 121) am vorderen Abschnitt (16, 116) des Dübelkörpers (2, 102) angeordnete hintere Teil (15, 115) des Bohreinsatzes (3, 103) mit Kunststoff des Dübelkörpers (2, 102) umspritzt oder dass der Bohreinsatz formschlüssig rastend in oder auf eine Aufnahme des Dübelkörpers ein- oder aufgesteckt ist.

2. Gipskartonplattendübel nach Anspruch 1, **dadurch gekennzeichnet, dass** der Gipskartonplattendübel derart ausgestaltet ist, **dass** der als Widerlager (22, 122) für das Schraubengewinde der in das Schraubloch (6, 106) des Dübelkörpers (2, 102) schraubbaren Schraube (21, 121) am vorderen Ende (5, 105) des Dübelkörpers (2, 102) verbleibende hintere Teil (15, 115) des Bohreinsatzes (3, 103) die in das Schraubloch (6, 106) schraubbare Schraube (21, 121) in ihrem eingeschraubten Zustand umschließt.

3. Gipskartonplattendübel nach einem der vorhergehenden Ansprüche, **dadurch gekennzeichnet, dass** der Dübelkörper (2, 102) aus einem ersten Kunststoff besteht und **dass** der hintere Teil (15, 115) des Bohreinsatzes (3, 103) aus einem anderen Werkstoff als der Dübelkörper (2, 102), insbesondere aus einem zweiten Kunststoff besteht.

4. Gipskartonplattendübel nach einem der vorhergehenden Ansprüche, **dadurch gekennzeichnet, dass** der vordere Teil (10, 110) des Bohreinsatzes (3, 103) aus Metall, Polyetheretherketon (abgekürzt: PEEK) oder Polyphthalamid (abgekürzt: PPA) besteht.

5. Gipskartonplattendübel nach einem der vorhergehenden Ansprüche, **dadurch gekennzeichnet, dass** der Dübelkörper (2, 102) durch Einschrauben der Schraube (21, 121) in das Schraubloch (6, 106) aufspreizbar ist.

6. Gipskartonplattendübel nach Anspruch 5, **dadurch gekennzeichnet, dass** der Dübelkörper (2, 102) einen Spreizschlitz (9, 109) oder eine Spreiznut aufweist.

7. Gipskartonplattendübel nach Anspruch 6, **dadurch gekennzeichnet, dass** der als Widerlager (22) für das Gewinde der in das Schraubloch (6) des Dübelkörpers (2) geschraubte Schraube (21) am vorderen Abschnitt (16) des Dübelkörpers (2) angeordnete hintere Teil (15) des Bohreinsatzes (3) in einer Ebene mit dem Spreizschlitz (9) oder der Spreiznut geteilt ist.

8. Gipskartonplattendübel nach einem der vorhergehenden Ansprüche, **dadurch gekennzeichnet, dass** der hintere Teil (115) des Bohreinsatzes (103) mittels der Schraube (121) relativ zum Dübelkörper (102) axial bewegbar ist.

9. Gipskartonplattendübel nach Anspruch 8, **dadurch gekennzeichnet, dass** der hintere Teil (115) des Bohreinsatzes (103) beim Einschrauben der Schraube (121) in den Dübelkörper (102) hinein bewegbar ist, derart, dass der Dübelkörper (102) aufgespreizt wird.

## Claims

1. Plasterboard fixing plug, having a fixing plug body (2, 102) which has a thread (7, 107) that is self-tapping in plasterboard for screwing into a plasterboard panel (19, 119) and an axial screw hole (6, 106) for screwing in a screw (21, 121), and having a drill bit (3, 103) for drilling a fixing plug hole (20, 120) for screwing the fixing plug body (2, 102) into the plasterboard panel (19, 119), wherein the drill bit (3, 103) consists at least partly of a material that is not melted by frictional heat on drilling through a plasterboard panel, and wherein the drill bit (3, 103) is arranged on a front portion (16, 116) of the fixing plug body (2, 102) in a screw-in direction and projects forwards in the screw-in direction beyond a front end (5, 105) of the fixing plug body (2, 102) in the screw-in direction, wherein the drill bit (3, 103) has a predetermined breaking point (17, 117) for separation or for displacement of a front part (10, 110) of the drill bit (3, 103) projecting forwards beyond the front end (5, 105) of the fixing plug body (2, 102) by screwing of a screw (21, 121) into the screw hole (6, 106) of the fixing plug body (2, 102), wherein the plasterboard fixing plug is configured in such a way that, after the separation or displacement of the front part (10, 110) of the drill bit (3, 103), a rear part (15, 115) of the drill bit (3, 103) arranged on the front portion (16, 116) of the fixing plug body (2, 102) remains on the front portion (16, 116) of the fixing plug body (2, 102) as counter-bearing (22, 122) for a screw thread of the screw (21, 121) screwable into the screw hole (6, 106); and the rear part (15, 115) of the drill bit (3, 103) arranged on the front portion (16, 116) of the fixing plug body (2, 102) as counter-bearing (22, 122) for the screw thread of the screw (21, 121) screwable into the screw hole (6, 106) of the fixing plug body (2, 102) has been overmoulded with plastics material of the fixing plug body (2, 102); or the drill bit has been inserted into or mounted on a receiver of the fixing plug body by means of an interlocking snap connection.

2. Plasterboard fixing plug according to claim 1, **characterised in that** the plasterboard fixing plug is configured in such a way that the rear part (15, 115) of the drill bit (3, 103) remaining on the front end (5, 105) of the fixing plug body (2, 102) as counter-bearing (22, 122) for the screw thread of the screw (21, 121) screwable into the screw hole (6, 106) of the fixing plug body (2, 102) encompasses the screw (21, 121) screwable into the screw hole (6, 106) in its screwed-in state.

3. Plasterboard fixing plug according to either one of the preceding claims, **characterised in that** the fixing plug body (2, 102) consists of a first plastics material; and the rear part (15, 115) of the drill bit (3, 103) consists of a material different from that of the fixing plug body (2, 102), especially of a second plastics material.

4. Plasterboard fixing plug according to any one of the preceding claims, **characterised in that** the front part (10, 110) of the drill bit (3, 103) consists of metal, polyether ether ketone (abbreviated to: PEEK) or polyphthalamide (abbreviated to: PPA).

5. Plasterboard fixing plug according to any one of the preceding claims, **characterised in that** the fixing plug body (2, 102) is expansible by screwing the screw (21, 121) into the screw hole (6, 106).

6. Plasterboard fixing plug according to claim 5, **characterised in that** the fixing plug body (2, 102) has an expansion slot (9, 109) or an expansion groove.

7. Plasterboard fixing plug according to claim 6, **characterised in that** the rear part (15) of the drill bit (3) arranged on the front portion (16) of the fixing plug body (2) as counter-bearing (22) for the thread of the screw (21) screwed into the screw hole (6) of the fixing plug body (2) is divided in the same plane as the expansion slot (9) or the expansion groove.

8. Plasterboard fixing plug according to any one of the preceding claims, **characterised in that** the rear part (115) of the drill bit (103) is movable axially relative to the fixing plug body (102) by means of the screw (121).

9. Plasterboard fixing plug according to claim 8, **characterised in that** when the screw (121) is being screwed in, the rear part (115) of the drill bit (103) is movable into the fixing plug body (102) in such a way that the fixing plug body (102) is expanded.

## Revendications

1. Cheville pour plaques de plâtre, comprenant un corps (2, 102) qui présente un filetage (7, 107) autotaraudeur dans du plâtre à parements cartonnés, destiné au vissage dans une plaque de plâtre (19, 119) et un trou axial de vissage (6, 106) affecté au vissage d'une vis (21, 121), et une pièce intégrée de perçage (3, 103) conçue pour percer un trou de chevillage (20, 120) dévolu au vissage du corps (2, 102) de la cheville dans la plaque de plâtre (19, 119), ladite pièce intégrée de perçage (3, 103) étant constituée, au moins en partie, d'un matériau qui ne fond pas sous l'action de la chaleur de frottement, au cours du perçage d'une plaque de plâtre, sachant que ladite pièce intégrée de perçage (3, 103) est disposée dans une région (16, 116) du corps (2, 102) de la cheville, antérieure dans une direction de vissage, et fait saillie vers l'avant, dans la direction de vissage, au-delà d'une extrémité (5, 105) dudit corps (2, 102) de la cheville, antérieure dans ladite direction de vissage, la pièce intégrée de perçage (3, 103) étant munie d'une zone (17, 117) de rupture par destination ciblant la séparation, ou un refoulement, d'une partie antérieure (10, 110) de ladite pièce intégrée de perçage (3, 103) qui fait saillie, vers l'avant, au-delà de ladite extrémité antérieure (5, 105) du corps (2, 102) de la cheville, suite au vissage d'une vis (21, 121) dans le trou de vissage (6, 106) dudit corps (2, 102) de la cheville,
sachant que ladite cheville pour plaques de plâtre est conçue de façon telle qu'à l'issue de la séparation ou du refoulement de la partie antérieure (10, 110) de la pièce intégrée de perçage (3, 103), une partie postérieure (15, 115) de ladite pièce intégrée de perçage (3, 103), située dans la région antérieure (16, 116) du corps (2, 102) de la cheville, subsiste en tant que contre-butée (22, 122) dédiée à un filetage de la vis (21, 121) pouvant être vissée dans le trou de vissage (6, 106), dans ladite région antérieure (16, 116) dudit corps (2, 102) de la cheville, sachant que ladite partie postérieure (15, 115) de ladite pièce intégrée de perçage (3, 103), située dans ladite région antérieure (16, 116) du corps (2, 102) de la cheville en tant que contre-butée (22, 122) dédiée audit filetage de la vis (21, 121) pouvant être vissée dans le trou de vissage (6, 106) du corps (2, 102) de la cheville, est noyée par injection dans la matière plastique dudit corps (2, 102) de la cheville, ou sachant que ladite pièce intégrée de perçage est emboîtée par complémentarité de formes, avec effet de crantage, dans ou sur un logement dudit corps de ladite cheville.

2. Cheville pour plaques de plâtre, selon la revendication 1, **caractérisée par le fait que** ladite cheville pour plaques de plâtre est conçue de façon telle que la partie postérieure (15, 115) de la pièce intégrée de perçage (3, 103), subsistant à l'extrémité antérieure (5, 105) du corps (2, 102) de ladite cheville en tant que contre-butée (22, 122) dédiée au filetage de la vis (21, 121) pouvant être vissée dans le trou de vissage (6, 106) dudit corps (2, 102) de la cheville, ceinture ladite vis (21, 121), pouvant être vissée dans ledit trou de vissage (6, 106), lorsqu'elle se trouve dans son état vissé.

3. Cheville pour plaques de plâtre, selon l'une des revendications précédentes, **caractérisée par le fait que** le corps (2, 102) de ladite cheville est constitué d'une première matière plastique ; et **par le fait que** la partie postérieure (15, 115) de la pièce intégrée de perçage (3, 103) consiste en un matériau autre que celui dudit corps (2, 102) de ladite cheville, notamment en une seconde matière plastique.

4. Cheville pour plaques de plâtre, selon l'une des revendications précédentes, **caractérisée par le fait que** la partie antérieure (10, 110) de la pièce intégrée de perçage (3, 103) consiste en un métal, en du polyétheréthercétone (abrégé en PEEK) ou en du polyphtalamide (abrégé en PPA).

5. Cheville pour plaques de plâtre, selon l'une des revendications précédentes, **caractérisée par le fait que** le corps (2, 102) de ladite cheville peut être déployé par vissage de la vis (21, 121) dans le trou de vissage (6, 106).

6. Cheville pour plaques de plâtre, selon la revendication 5, **caractérisée par le fait que** le corps (2, 102) de ladite cheville est pourvu d'une fente de déploiement (9, 109) ou d'une rainure de déploiement.

7. Cheville pour plaques de plâtre, selon la revendication 6, **caractérisée par le fait que** la partie postérieure (15) de la pièce intégrée de perçage (3), située dans la région antérieure (16) du corps (2) de ladite cheville en tant que contre-butée (22) dédiée au filetage de la vis (21) vissée dans le trou de vissage (6) dudit corps (2) de la cheville, est scindée dans un plan par la fente de déploiement (9), ou par la rainure de déploiement.

8. Cheville pour plaques de plâtre, selon l'une des revendications précédentes, **caractérisée par le fait que** la partie postérieure (115) de la pièce intégrée de perçage (103) peut être mue, au moyen de la vis (121), dans le sens axial par rapport au corps (102) de ladite cheville.

9. Cheville pour plaques de plâtre, selon la revendication 8, **caractérisée par le fait que** la partie postérieure (115) de la pièce intégrée de perçage (103) peut être mue pour pénétrer dans le corps (102) de ladite cheville, lors du vissage de la vis (121), de telle sorte que ledit corps (102) de la cheville soit déployé.
